# EUROPEAN PATENT APPLICATION

(11) **EP 1 455 533 A1**
(43) Date of publication of application: **08.09.2004**
(21) Application number: 03027459.1
(22) Date of filing: 01.12.2003
(51) Int. Cl.: H04N 7/24

(54) **Information processing apparatus and data transfer method for use in the same**

(30) Priority: 16.01.2003 JP 2003008141
(71) Applicant: Kabushiki Kaisha Toshiba, Tokyo 105-8001 (JP)
(72) Inventor: Nakamura, Seiichi, Toshiba Corporation, Minato-ku Tokyo 105-8001 (JP); Hirabayashi, Hirotada Toshiba Corporation, Minato-ku Tokyo 105-8001 (JP); Baba, Kunio Toshiba Corporation, Minato-ku Tokyo 105-8001 (JP); Ogawa, Takehiro, Toshiba Corporation, Minato-ku Tokyo 105-8001 (JP)
(74) Representative: Henkel, Feiler & Hänzel

(57) **Abstract**

An information processing apparatus executes communication with a data storage device via a network (14, 15). The information processing apparatus includes a unit that designates a section of a stream of data stored in the data storage device, the section being to be downloaded into the information processing apparatus, and a unit that acquires partial data, which includes a stream belonging to the designated section within the stream of the data, from the data storage device via the network (14, 15).

## Description

The present invention relates to an information processing apparatus that executes communication with a server, and to a data transfer method for use in the information processing apparatus.

In recent years, information processing technology and networking technology have remarkably developed. With the development, a home network system has been developed for realizing communications among household electronic apparatuses such as TVs and audio equipment.

In the home network system, a home server can communicate with a client terminal such as a personal computer via the network. The client terminal can acquire and reproduce, where necessary, various content data stored in the home server.

Recently, a home server has been developed, which has a recording function of recording content, such as TV broadcast program data, on a disk storage device. The TV broadcast program data is stored as a file in the disk storage device. The data size of the file stored in the disk storage device becomes very large, depending on the length of broadcast time of the TV broadcast program data to be recorded. The client terminal downloads the data stored in the home server in units of a file. In order to download the TV broadcast program data, which is recorded in the home server as a file, into the client terminal from the home server via the network, all the data of the file has to be transferred and this requires a long transfer time.

When a user performs programmed recording of a desired TV broadcast program, there is a case where the user presets a recording end time at a time point later than the scheduled end time of the TV broadcast program, for example, in anticipation of possible extension of the broadcast end time. In such a case, a file to be stored in the home server contains extra data other than the data of the desired TV broadcast program data.

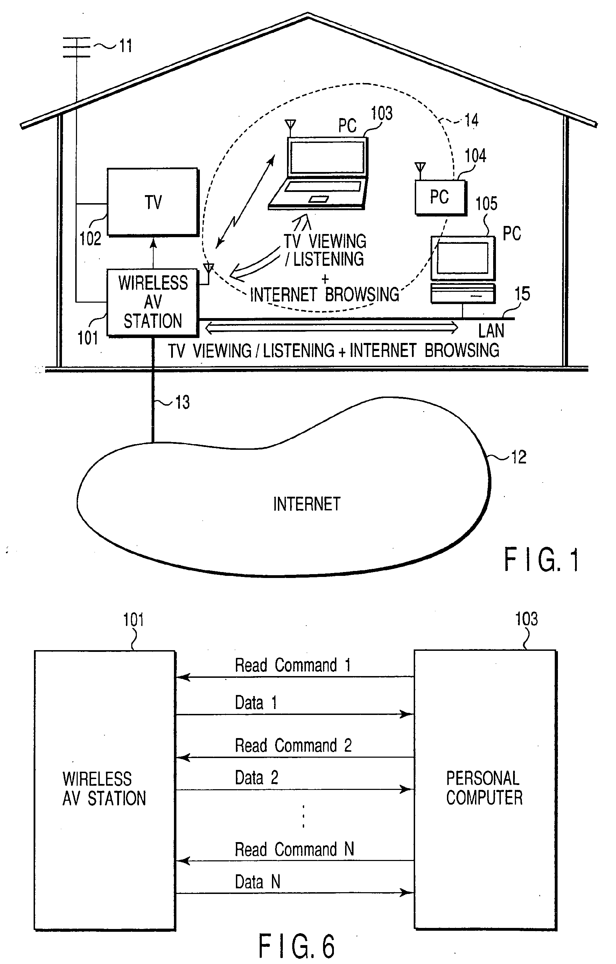

Jpn. Pat. Appln. KOKAI Publication No. 9-134367 (pp. 4-8, FIGS. 1, 10 and 11) discloses a multimedia processing system having a function of extracting part of data. In this multimedia processing system, a client generates partial data addresses (coordinate values, time, the number of bytes). The server extracts data in a range corresponding to the partial data addresses, and sends it to the client. The partial data addresses indicative of coordinate values designate a two-dimensional image range, which is to be cut out of a two-dimensional still image display region or a two-dimensional motion video display region. The partial data addresses are generated by designating a two-dimensional range on a display region of a still image displayed on a client's display, or by changing the size of a motion video display region displayed on the client's display.

In the above multimedia processing system, however, it is presupposed that the coordinate values indicative of the cut-out range of the two-dimensional image are used as the partial data addresses. How to use the time and the number of bytes as the partial data addresses is not disclosed.

Therefore, it is necessary to realize a new function for downloading only partial data corresponding to a specific section within a time-serial data stream.

The object of the present invention is to provide an information processing apparatus and a data transfer method, which can acquire, from a data storage device such as a server, data corresponding to a specific section, desired by a user, of a data stream such as a TV broadcast program recorded in the data storage device.

According to an embodiment of the present invention, there is provided an information processing apparatus for performing communication with a data storage device via a network, comprising: means for designating a section of a stream of data stored in the data storage device, the section being to be downloaded into the information processing apparatus; and means for acquiring partial data, which includes a stream belonging to the designated section, from the data storage device via the network.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows the structure of a home network system according to an embodiment of the present invention;
FIG. 2 is a block diagram showing the structure of a server provided in the home network system shown in FIG. 1;
FIG. 3 is a block diagram showing the structure of an information processing apparatus provided in the home network system shown in FIG. 1;
FIG. 4 illustrates a scheme of a content transmitting process executed in the home network system shown in FIG. 1;
FIG. 5 shows an example of a partial data copy screen displayed on a display monitor of the information processing apparatus provided in the home network system shown in FIG. 1;
FIG. 6 shows the state in which the information processing apparatus acquires partial data from the server in the home network system shown in FIG. 1;
FIG. 7 is a flow chart illustrating the procedure of a partial data copy process executed by the information processing apparatus provided in the home network system shown in FIG. 1;
FIG. 8 shows an example of a title list screen displayed on the display monitor of the information processing apparatus provided in the home network system shown in FIG. 1;
FIG. 9 is a flow chart illustrating the procedure of a preview display process executed by the information processing apparatus provided in the home network system shown in FIG. 1; and
FIG. 10 illustrates an example of the operation for copying a part of an AV file stored in the server into the information processing apparatus in the home network system shown in FIG. 1.

An embodiment of the present invention will now be described with reference to the accompanying drawings.

FIG. 1 shows the structure of a home network system using an information processing apparatus according to an embodiment of the present invention.

The home network system includes a wireless AV (Audio-Video) station 101, a TV receiver 102, notebook-type personal computers 103 and 104, and a desktop-type personal computer 105. Each of the notebook-type personal computers 103 and 104 and desktop-type personal computer 105 is a computing device having a video display and audio outputs (at least one speaker).

The wireless AV station 101 is an apparatus functioning as a home network server. The wireless AV station 101 can transmit both of broadcast content, such as a TV program, and Internet content such as a Web page, to personal computers 103 to 105 via a wireless or wired network within the house.

The wireless AV station 101 is connected to a global network (external network) such as the Internet 12 via a communication line 13. The communication line 13 is, for example, an ISDN (Integrated Services Digital Network), an ADSL (Asymmetric Digital Subscriber Line) or a CATV (Cable TV). Further, the wireless AV station 101 is connected to the respective personal computers 103 to 105 within the house via a wireless or wired network that constitutes a home network.

Each of the personal computers 103 to 105 is an information processing apparatus functioning as a client of the wireless AV station 101. Each of the notebook-type personal computers 103 and 104 includes a wireless communication device. Thereby, each of the notebook-type personal computers 103 and 104 can be connected to the wireless AV station 101 via a wireless communication network (wireless LAN) 14. In addition, each of the personal computers 103 and 104 can be connected to the wireless AV station 101 via a wired communication network (wired LAN) 15. The desktop-type personal computer 105 is connected to the wireless AV station 101 via the wired communication network (wired LAN) 15.

The wireless AV station 101 connects each of the personal computers 103 to 105 to the Internet 12. The wireless AV station 101 realizes data communication between a Web site on the Internet 12 and each of the personal computers 103 to 105.

An antenna cable connected to an outdoor TV broadcast receiving antenna 111 is led into the house. The TV receiver 102 and wireless AV station 101 are connected to the antenna cable. Broadcast program data sent from a broadcast station (including, e.g. satellite transmission and other wireless transmissions) can be received and reproduced by the TV receiver 102 and can also be received by the wireless AV station 101. The wireless AV station 101 transmits by radio the received broadcast program data to the notebook-type personal computer 103, 104 via the wireless LAN 14. In addition, the wireless AV station 101 transmits the received broadcast program data to the desktop-type personal computer 105 via the wired LAN 15.

The wireless AV station 101 performs various functions including a wireless router function, a TV function, a TV recording function, a content server function and a remote control function. These functions are described below.

### Wireless router function

The wireless router function is a function for connecting each information processing apparatus, which is communicable with the wireless AV station 101 via the wireless LAN 14, to the Internet 12, thereby effecting data communication between a Web site on the Internet 12 and each information processing apparatus. The user can wirelessly browse the Internet from anywhere in the house, using the notebook-type personal computer 103 or 104.

### TV function

The TV function is a function for transmitting currently broadcast program data (TV program being broadcasting at present) received by the wireless AV station 101 to each information processing apparatus connected to the wireless AV station 101 via the wireless LAN 14 or wired LAN 15. The user can view and listen to the currently broadcast program data (live video) from anywhere in the house, using the notebook-type personal computer 103 or 104 or the desktop-type personal computer 105.

### TV recording function

The wireless AV station 101 includes a magnetic disk drive unit (hard disk drive (HDD)) as a large-capacity storage device for recording broadcast program data. The wireless AV station 101, for example, can record currently broadcast program data in the magnetic disk drive unit as a file, while wirelessly transmitting the broadcast program data to the information processing apparatus, 103-105. In addition, the wireless AV station 101 can receive other currently broadcast program data and record it in the magnetic disk drive unit, while transmitting the broadcast program data already stored in the magnetic disk drive unit to the information processing apparatus, 103-105, and/or the TV receiver 102. Furthermore, the wireless AV station 101 can output the broadcast program data stored in the magnetic disk drive unit to the TV receiver 102 and information processing apparatuses 103 to 105.

### Content server function

In response to a data acquisition request from each information processing apparatus, the wireless AV station 101 can transmit to the requesting information processing apparatus various content data, such as broadcast program data, recorded in the magnetic disk drive unit as files.

### Remote control function

The user can operate the personal computer 103, 104 or 105 in order to remote-control the TV function, TV recording function or the content server function of the wireless AV station 101. In addition, using a dedicated remote-control unit for operating the wireless AV station 101, the user can control the TV function, TV recording function and content server function of the wireless AV station 101. Furthermore, at a place outside the house, the user can connect his/her mobile phone or personal computer to the wireless AV station 101 via the Internet 12, thereby remote-controlling the TV function, TV recording function and content server function of the wireless AV station 101.

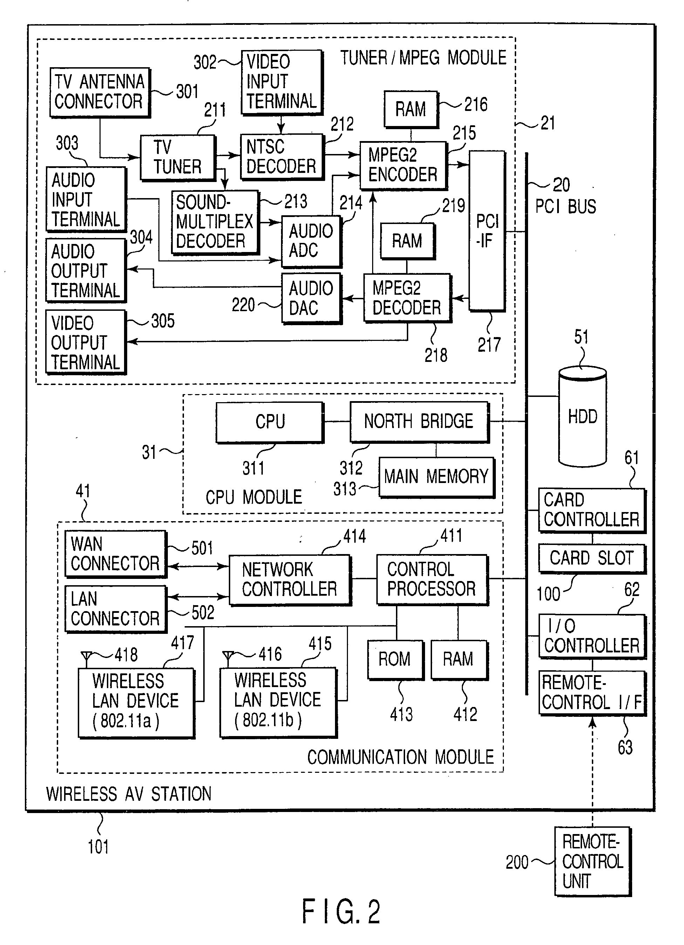

Next, referring to FIG. 2, the structure of the wireless AV station 101 will now be described.

In general terms, the wireless AV station 101 comprises three components, as shown in FIG. 2. That is, it comprises a tuner/MPEG module 21, a CPU module 31 and a communication module 41.

The tuner/MPEG module 21, CPU module 31 and communication module 41 are connected to a bus 20 such as a PCI bus. A magnetic disk drive unit (hard disk drive (HDD)) 51 is also connected to the bus 20.

The tuner/MPEG module 21 executes, for example, a broadcast program data receiving process, an encoding process for compression-encoding received broadcast program data, and a decoding process for decoding compression-encoded TV broadcast program data. The tuner/MPEG module 21 comprises, as shown in FIG. 2, a TV tuner 211, an NTSC (National TV Standards Committee) decoder 212, a sound-multiplex decoder 213, an audio A/D converter (audio ADC) 214, an MPEG2 encoder 215, a RAM 216, a PCI bus interface (PCI-IF) 217, an MPEG2 decoder 218, a RAM 219, and an audio D/A converter (audio DAC) 220.

The TV tuner 211 is connected to a TV antenna cable via a TV antenna connector 301. The TV tuner 211 is a device for receiving broadcast program data of a channel, listening/viewing of which is requested from the personal computer 103, 104, 105 or a remote-control unit 200. Based on the request for listening/viewing, the TV tuner 211 effects reception of TV broadcast signals and selection of the channel. The TV tuner 211 separates the received TV broadcast program data of the cannel into a video signal and an audio signal. The separated video signal is sent to the NTSC decoder 212. The NTSC decoder 212 converts, when necessary, the separated video signal to digital data.

The NTSC decoder 212 is also connected to a video input terminal 302. The NTSC decoder 212 can receive a video signal from an external video device such as a DVD (Digital Versatile Disc) player or a VCR (Video-Cassette Recorder). The separated audio data is decoded by the sound-multiplex decoder 213 and then converted to digital data by the audio A/D converter (audio ADC) 214. The audio A/D converter (audio ADC) 214 is also connected to an audio input terminal 303 and can receive an audio signal from an external video/audio device.

The MPEG2 encoder 215 receives the video data from the NTSC decoder 212 and the audio data from the audio A/D converter 214. The MPEG2 encoder 215 executes an encoding process for compression-encoding the input video data and audio data. The encoding process is executed according to the MPEG2 standard. The RAM 216 is used as a working memory for the encoding process executed by the MPEG2 encoder 215. The broadcast program data received by the TV tuner 211 is encoded by the MPEG2 encoder 215 and thus converted to an MPEG2 data stream.

The PCI bus interface (PCI-IF) 217 is an interface for connection between the tuner/MPEG module 21 and the bus 20. The PCI bus interface (PCI-IF) 217 is used to enable the tuner/MPEG module 21 to communicate with the CPU module 31 and HDD 51 via the bus 20. The PCI bus interface (PCI-IF) 217 includes a register group accessible by the CPU module 31. The operations of the TV tuner 211 and MPEG2 encoder 215 are controlled according to commands set by the CPU module 31 in the register group in the PCI bus interface (PCI-IF) 217.

The MPEG2 decoder 218 decodes broadcast program data that is encoded in the MPEG2 format. For example, when encoded broadcast program data recorded in the HDD 51 is to be reproduced by the TV receiver 102, the encoded TV broadcast program data, which is read out of the HDD 51, is sent to the MPEG2 decoder 218 via the PCI bus interface 217. The MPEG2 decoder 218 decodes (decompresses) the TV broadcast program data. The RAM 219 is used as a working memory for the decoding process executed by the MPEG2 decoder 218. The operation of the MPEG2 decoder 218, too, is controlled by commands set by the CPU module 31 in the register group in the PCI bus interface 217.

Video data decoded by the MPEG2 decoder 218 is sent to the TV receiver 102 via the video output terminal 305. In addition, audio data decoded by the MPEG2 decoder 218 is converted, where necessary, to an analog signal by the audio D/A converter (audio DAC) 220, and then output to an external audio/video device via the audio output terminal 304.

In the present embodiment, it is possible that broadcast program data decoded by the MPEG2 decoder 218 is input once again to the MPEG2 encoder 215 and subjected to a re-encoding process. This technique is employed to perform a down-converting process for converting a transmission rate (bit rate) of encoded broadcast program data recorded in the HDD 51 to a specific transmission rate corresponding to, e.g. the band of the wireless LAN 14.

It should be noted that the transmission rate (bit rate) of encoded broadcast program data (MPEG2 stream) obtained by the MPEG2 encoder 215 varies depending on the image quality (low image quality, standard image quality or high image quality) of broadcast program data to be recorded in the HDD 51. If the high image quality is selected, an MPEG2 stream of broadcast program data, which has a very high transmission rate, is recorded in the HDD 51. In this case, there may be a case where the MPEG2 stream of this broadcast program data cannot be transmitted in real time with the band of the wireless LAN 14. In such a case, the aforementioned down-converting process is used.

The CPU module 31 controls the TV tuner 211, MPEG2 encoder 215 and MPEG2 decoder 218 of the tuner/MPEG module 21, and also controls data write to the HDD 51 and data read-out from the HDD 51. In addition, the CPU module 31 receives commands relating to TV viewing/listening from the personal computers 103 to 105, using communication with the communication module 41, and transmits to the communication module 41 an MPEG2 stream of broadcast program data to be sent to the personal computers 103 to 105. The CPU module 31 comprises a CPU 311, a north bridge 312 for connecting a CPU bus of the CPU 311 and the PCI bus 20, and a main memory 313.

The communication module 41 is a communication control device that is operable as a wireless LAN router. The communication module 41 is configured to be wirelessly connectable to the personal computer 103, 104 via the wireless LAN 14. In addition, the communication module 41 is connected to the personal computer 105 via the wired LAN 15. In accordance with a request sent from each of the personal computers 103 to 105, the communication module 41 connects the personal computer, 103 to 105, to the Internet 12, and effects data transfer between the personal computer, 103 to 105, and the Internet 12. In this case, the communication module 41 executes the overall processing relating to data transfer between each of the personal computers 103 to 105 and the Internet 12. The CPU module 31 is not used for data transfer between each of the personal computers 103 to 105 and the Internet 12.

The communication module 41, as shown in FIG. 2, includes a control processor 411, a RAM 412, a ROM 413, a network controller 414, two wireless LAN devices 415 and 417, a WAN connector 501, and a LAN connector 502.

The WAN (Wide Area Network) connector 501 is a broadband terminal for data transmission/reception with the Internet 12. The WAN connector 501 is connected to a communication line 13 via, e.g. a modem. The LAN connector 502 is connected to the wired LAN 15 within the house.

The network controller 414 is a network control device for controlling data transfer with the Internet 12 via the WAN connector 501 and data transfer with the household wired LAN 15 via the LAN connector 502. The wireless LAN devices 415 and 417 are wireless communication devices for data transfer with the personal computer 103, 104 via the wireless LAN 14. Each of the wireless LAN devices 415 and 417 wirelessly communicates with the personal computer 103, 104 via an associated antenna 416, 418. The wireless LAN device 415 may be, for example, configured to execute wireless communication according to the IEEE 802.11b standard. The wireless LAN device 417 may be, for example, configured to execute wireless communication according to the IEEE 802.11a standard. With the provision of the two wireless LAN devices 415 and 417, the communication module 41 can communicate with either the personal computer 103 or personal computer 104, whether the wireless communication standard supported by the personal computer 103, 104 is IEEE 802.11b or IEEE 802.11a. The wireless LAN device used for wireless communication is seamlessly switched in accordance with the wireless communication standard supported by the client (personal computer 103, 104) wirelessly connected to the wireless AV station 101.

The control processor 411 controls the network controller 414 and wireless LAN devices 415 and 417, thereby controlling data transfer between each of the personal computers 103 to 105 and the Internet 12. To be more specific, the control processor 411 performs IP masquerade function, NAT (Network Address Translation) function, and DHCP (Dynamic Host Configuration Protocol) function, in order to cause the communication module 41 to operate as a wireless router. Further, the control processor 411 is connected to the PCI bus 20. The control processor 411 has functions for sending to the CPU 311 via the PCI bus 20 a request (command) relating to TV viewing/listening, which is received from the personal computer 103, 104 via the wireless LAN device 415, 417, and sending to the CPU 311 via the PCI bus 20 a request (command) relating to TV viewing/listening which is received from the personal computer 105 on the wired LAN 15 via the network controller 414.

The control processor 411 transmits a broadcast program data to the personal computer that has requested the broadcast program data, through the wireless LAN device 415, 417 or the network controller 414, when it receives the broadcast program data from the CPU 311 via PCI bus 20. The transmitting of the broadcast program data to the personal computer is performed in parallel with the data-transfer between the personal computer and the Internet 12.

For example, while the personal computer 103 that is wirelessly connectable to the communication module 41 is wirelessly browsing the Internet, broadcast program data requested by the personal computer 103 is wirelessly transmitted to the personal computer 103. In this case, the control processor 411 controls the wireless LAN device 415 or 417 so that Web content data received from a Web server on the Internet 12 and broadcast program data encoded by the tuner/MPEG module 21 may be wirelessly transmitted to the personal computer 103 in a time-division manner. Specifically, the control processor 411 performs a process for multiplexing the Web content data and encoded broadcast program data. The multiplexed Web content data and broadcast program data is wirelessly transmitted to the personal computer 103 in a time-division manner. In this way, the Web content data and broadcast program data is sent to the personal computer 103 as independent data. Thereby, the personal computer 103 can simultaneously display the Web content data and broadcast program data, using associated application programs. In addition, the display positions and display sizes of windows of the Web content data and broadcast program data can freely be altered by the associated application programs.

The above-described functions of the control processor 411 are realized by firmware stored in the ROM 413.

Further, the wireless AV station 101 includes a card controller 61, an I/O controller 62 and a remote-control interface 63. The card controller 61 controls access to a memory card inserted in a card slot 100 provided in the wireless AV station 101. The card controller 61 is used to read still image data and audio data stored in the memory card and to record the data in the HDD 51.

The I/O controller 62 and remote-control interface 63 are used to receive a remote-control code sent from a remote-control unit 200 by an infrared signal, etc. The received remote-control code is sent to the CPU module 31 via the bus 20.

The HDD 51 is used to store various content data such as broadcast program data, still image data and audio data. The CPU 311 manages the content recorded in the HDD 51 as a content database. The content database includes attribute information, such as a program title, a channel number, a song title, a genre and an artist name, in association with each content data item recorded in the HDD 51. The CPU 311 presents the content of the content database, as a content menu, to the screen of the TV receiver 102 or the information processing apparatus, 103-105, in response to a command sent from the information processing apparatus, 103-105, or remote-control unit 200. The user can select desired content data, referring to the content menu.

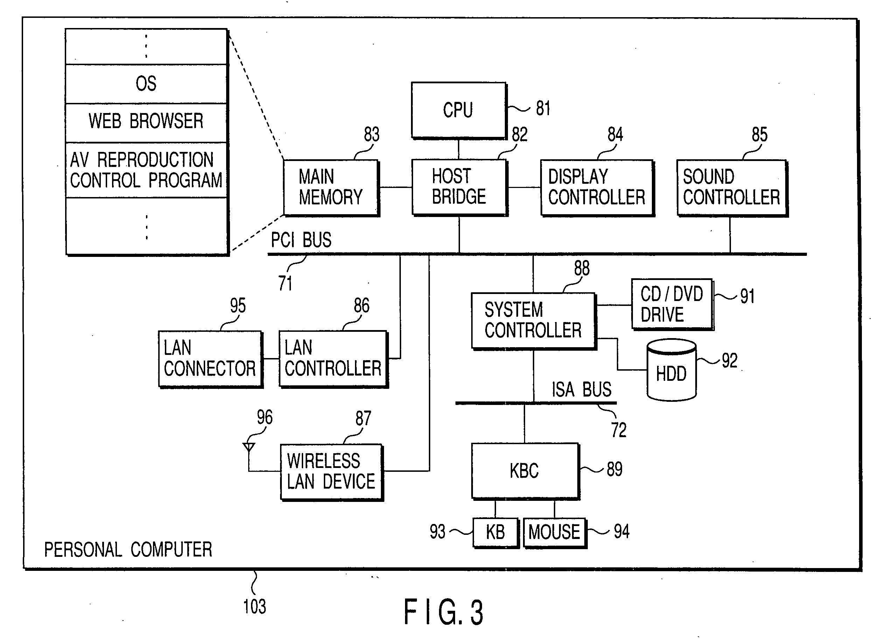

The structure of each information processing apparatus serving as a client will now be described with reference to FIG. 3. The notebook-type personal computer 103 is described by way of example.

As is shown in FIG. 3, the personal computer 103 includes a PCI bus 71, an ISA bus 72, a CPU 81, a host bridge 82, a main memory 83, a display controller 84, a sound controller 85, a LAN controller 86, a wireless LAN device 87, a system controller 88, a keyboard controller (KBC) 89, a CD/DVD drive 91, an HDD 92, a keyboard (KB) 93, a mouse 94, and a LAN connector 95.

The CPU 81 is a processor for controlling the operation of the personal computer 103. The CPU 81 executes various programs loaded in the main memory 83, such as an operating system (OS), a Web browser and an AV reproduction control program. The AV reproduction control program is an application program for reproducing audio-video data (AV data). The AV reproduction control program includes a function of remote-controlling the wireless AV station 101, a function of reproducing AV data, such as TV broadcast program data and music data, which is sent from the wireless AV station 101, and a function of downloading AV data such as TV broadcast program data and music data from the wireless AV station 101 as a file. In addition, the AV reproduction control program has a function of reproducing AV data recorded on a recording medium of a CD/DVD that is read by the CD/DVD drive 91.

The display controller 84 is a device for controlling a display monitor of the personal computer 103. The sound controller 85 is used as a sound source for producing sound corresponding to audio data.

The LAN controller 86 is a device for executing communication with the wireless AV station 101 via the wired LAN. In the case where the LAN connector 95 is connected to the wired LAN, the CPU 81 executes communication with the wireless AV station 101 via the LAN controller 86.

The wireless LAN device 87 is a wireless communication device for transmitting/receiving data to/from the wireless AV station 101 via the wireless LAN 14. The wireless LAN device 87 executes wireless communication with the wireless AV station 101 via an antenna 96. The wireless LAN device 87 is configured to execute wireless communication according to the IEEE 802.11b or IEEE 802.11a standard.

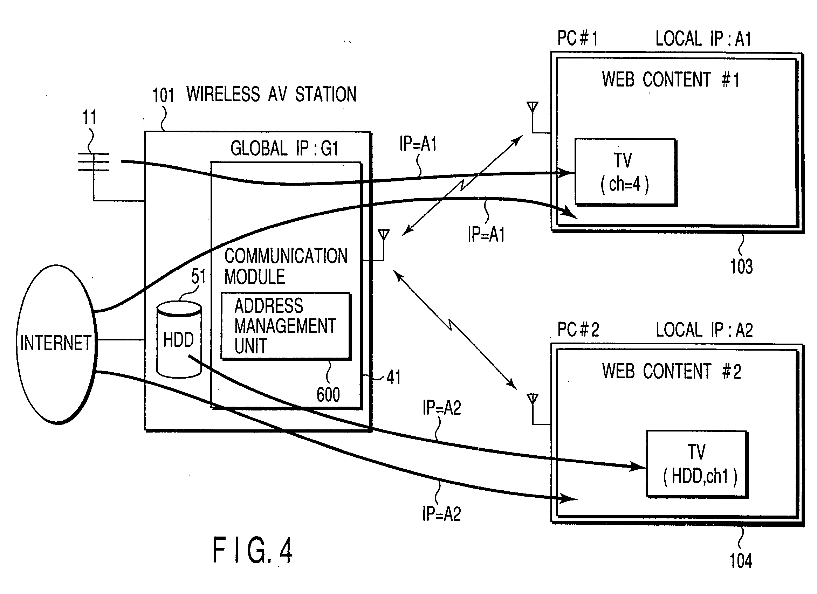

FIG. 4 illustrates a state in which Internet browsing and TV broadcast program viewing/listening are wirelessly performed on the two personal computers 103 and 104.

The personal computer 103 (PC#1) displays Web content #1, while enabling viewing/listening of currently broadcast TV program data (e.g. TV broadcast program data of channel number 4: ch = 4). On the other hand, the personal computer 104 (PC#2) displays Web content #2, while enabling viewing/listening of TV broadcast program data of another title already recorded in the HDD 51 (e.g. TV broadcast program data of channel number 1 recorded in HDD 51: HDD, ch = 1).

An address management unit 600 provided in the control processor 411 of communication module 41 manages local IP addresses of the personal computers 103 and 104. TV broadcast program data requested by the personal computer 103 is sent to a local IP address (A1) of the personal computer 103. On the other hand, TV broadcast program data requested by the personal computer 104 is sent to a local IP address (A2) of the personal computer 104.

When the personal computer 103, 104 access the Internet 12, the local IP addresses of the personal computer 103, 104 are converted to a global IP address assigned to the communication module 41. Communication between a Web server on the Internet 12 and the communication module 41 is performed using the global IP address assigned to the communication module 41. In addition, communication between the communication module 41 and each of the personal computers 103 and 104 is performed using the local IP address of each of the personal computers 103 and 104.

Next, the data download function provided by the AV reproduction control program will now be described.

The data download function is a function for downloading into the client only a necessary part of an AV data stream stored in the wireless AV station 101 (hereinafter referred to as "partial data copy" function). In the description below, it is assumed that the personal computer 103 is used as a client.

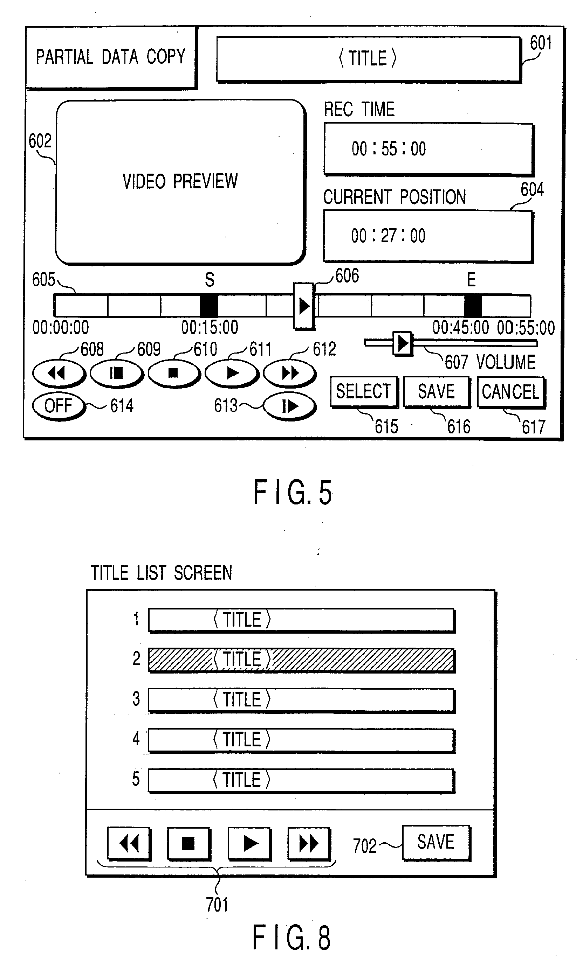

FIG. 5 shows an example of a "partial data copy" screen that is displayed on the display monitor of the personal computer 103 by the AV reproduction control program.

The "partial data copy" screen is a graphical user interface that enables the user to designate a part to be acquired from an AV data stream (motion video data and audio data) such as a broadcast program, which is stored as a file in the wireless AV station 101. As is shown in FIG. 5, the "partial data copy" screen displays a title field 601, a video preview area 602, a recording time (REC TIME) field 603, a current position field 604, a time scale bar 605, a slider 606 and a volume control bar 607.

The title field 601 is a field that displays the title of the AV data stream, which is the object of the partial data copy selected by the user. The video preview area 602 is an image display area that displays, as a preview image, an image at a given position on the motion video stream included in the AV data that is the object of the partial data copy. The given position on the stream, which is to be displayed as the preview image, is changed by the user's operation of moving the slider 606.

The recording time (REC TIME) field 603 is a field that displays the length (hour, minute, second) of the recording time of the whole AV data stream that is the object of partial data copy. The length of the recording time is also the length of reproduction time. For example, if the total time length of the recording time of the AV data is 55 minutes, the recording time (REC TIME) field 603 displays "00:55:00". The current position field 604 is a field that displays the current position (hour, minute, second) on the AV data stream, the preview image of which is displayed on the video preview area 602.

For example, if the current position of the slider 606 is at the center of the time scale bar 605, the video preview area 602 displays a motion video image at the position corresponding to the elapsed time of 27 minutes from the beginning of the AV data stream. In addition, the current position field 604 displays "00:27:00" as the current position.

The time scale bar 605 and slider 606 are used as a user interface that enables the user to designate a to-be-downloaded stream section (range) of the AV data stream, that is, a partial data section (range). The length of the time scale bar 605 corresponds to the total time length of the AV data stream that is the object of partial data copy. In other words, the left end and right end of the time scale bar 605 correspond to the beginning position and end position of the AV data stream that is the object of partial data copy.

The slider 606 (cursor) moves over the time scale bar 605 in accordance with the user's operation of the mouse or keyboard. As mentioned above, the video preview area 602 reproduces and displays, as the preview image, the motion video at the position on the AV data stream, which corresponds to the current position of the slider 606 over the time scale bar 605. Thus, the user can designate the start position (S) and end position (E) of the data section for the partial data copy, while viewing the preview image. Since the AV data stored in the wireless AV station 101 is an MPEG2 stream, the designation of each of the start position (S) and end position (E) is executed not in units of a frame, but in units of a GOP (Group of Pictures) of the MPEG2 stream.

In addition, at the same time as the reproduction and display of the motion video, audio data at the position on the AV data stream corresponding to the current position of the slider 606 is reproduced. The volume of the audio data is varied by a volume control bar 607.

In the case shown in FIG. 5, a position corresponding to a time instant after the elapsed time of 15 minutes from the beginning of the AV data stream is designated as the start position (S). A position corresponding to a time instant after the elapsed time of 45 minutes from the beginning of the AV data stream is designated as the end position (E). The designated start position (S) and end position (E) are given by time information indicative of the elapsed times from the beginning of the AV data stream. The AV reproduction control program acquires from the HDD 51 of wireless AV station 101 the partial data including the stream belonging to the time range between the designated start position (S) and end position (E).

The "partial data copy" screen further includes operation buttons 608 to 614 relating to a reproduction control of the AV data that is the object of partial data copy (a rewind play button 608, a pause button 609, a stop button 610, a play button 611, a fast-forward play button 612, a single step (frame advance) play button 613 and an OFF button 614), a "SELECT" button 615, a "SAVE" button 616 and a "CANCEL" button 617. In accordance with the operation buttons 608 to 614, the AV reproduction control program can perform the AV data reproduction process. With the progress of the reproduction process, the position of the slider 606 moves over the time scale bar 605.

In short, the position of the slider 606 over the time scale bar 605 shifts not only in accordance with the user's operation of the mouse of keyboard, but also in accordance with the progress of the reproduction process based on the operations of the buttons 608 to 614.

The "SELECT" button 615 is an operation button for selecting the current position of the slider 606 over the time scale bar 605 as the start position (S) or end position (E) of the data section that is the object of the partial copy. When the "SELECT" button 615 is depressed, the current position of the slider 606 on the time scale bar 605 is determined as the start position (S). If the "SELECT" button 615 is depressed once again after the determination of the start position (S), the current position of the slider 606 on the time scale bar 605 is determined as the end position (E). The user can cancel the selected start position (S) and end position (E) by operating the "CANCEL" button 617.

The "SAVE" button 616 is an operation button for instructing the start of the partial data copy. If the user operates the "SAVE" button 616 following the selection of the start position (S) and end position (E), the AV reproduction control program starts the partial data copy process. That is, in the partial data copy process, the AV reproduction control program acquires from the wireless AV station 101 the partial data including the stream belonging to the section between the start position (S) and end position (E) in the AV data stream that is the object of the partial data copy.

To start with, in the partial data copy process, the values of the designated start position (S) and end position (E) are converted from time information to address information. This conversion process is performed using management information associated with the AV data that is the object of partial data copy. The management information defines the relationship between the elapsed time from the start of reproduction of AV data and the address value indicative of the offset value (number of bytes) from the start address of the AV data, at intervals of predetermined unit time (e.g. 0.5 second corresponding to 1 GOP). When the AV data for the partial data copy is designated, the AV reproduction control program acquires the management information associated with the AV data from the wireless AV station 101. Referring to the management information, the AV reproduction control program converts the elapsed time from the start of reproduction of the AV data designated by the start position (S) to a first address value indicative of the offset value (number of bytes) from the start address of the AV data. In addition, the AV reproduction control program converts the elapsed time from the start of reproduction of the AV data designated by the end position (E) to a second address value indicative of the offset value (number of bytes) from the start address of the AV data. The AV reproduction control program acquires from the wireless AV station 101 the partial data including the stream belonging to the range between the first address value and second address value.

If the "CANCEL" button 617 is operated while the partial data copy process is being executed, the partial data copy process is stopped immediately.

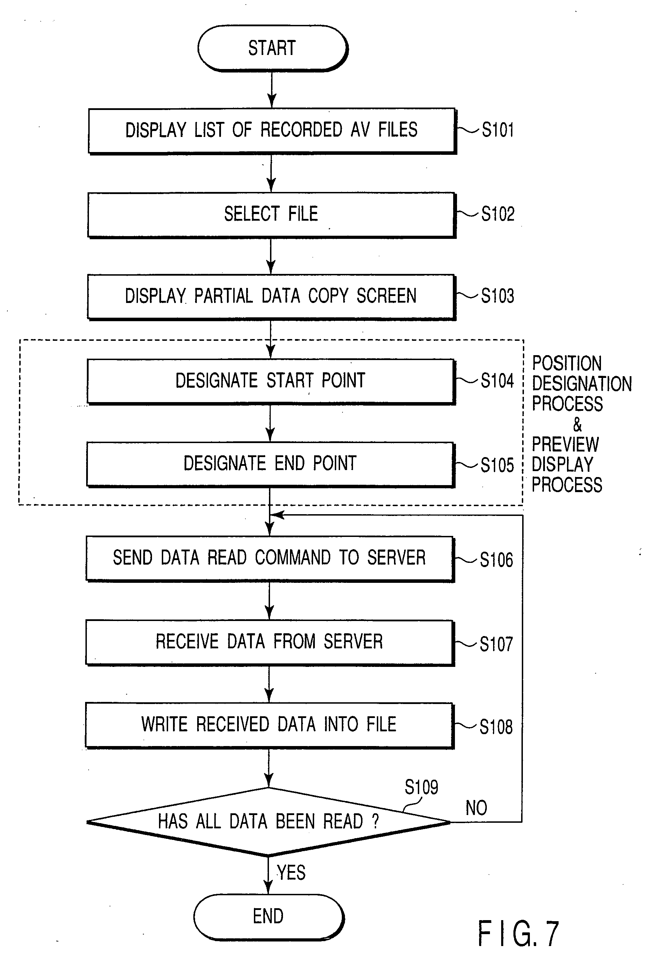

FIG. 6 illustrates a data transfer process in which the partial data designated by the start position (S) and end position (E) is transferred from the wireless AV station 101 to the personal computer 103.

The AV data that is the object of partial data copy is stored as a file in the HDD 51 of wireless AV station 101. The AV reproduction control program opens the file of the AV data for the partial data copy, which is designated by the title displayed on the title field 601. In addition, the AV reproduction control program acquires management information associated with the AV data from the wireless AV station 101. This management information is the information generated by the wireless AV station 101 when the AV data is encoded and recorded in the HDD 51.

When the "SAVE" button 616 is operated by the user, the AV reproduction control program executes the above conversion process and calculates the first and second address values corresponding to the start position (S) and end position (E). Then, the AV reproduction control program generates a data read command for requesting read-out of partial data belonging to the range between the first address value and second address value. The data read command is sent to the wireless AV station 101. In practice, the AV reproduction control program generates not a single data read command but a plurality of data read commands for requesting read-out of data of predetermined sizes, and successively transmits the data read commands to the wireless AV station 101.

Each data read command is indicative of a start address of data to be read out of the opened AV file and a data size measured from the start address. The partial data acquired from the opened AV data file is saved as a file in the personal computer 103.

Now referring to the flow chart of FIG. 7, the procedure of the partial data copy process executed by the CPU 81 of the personal computer 103.

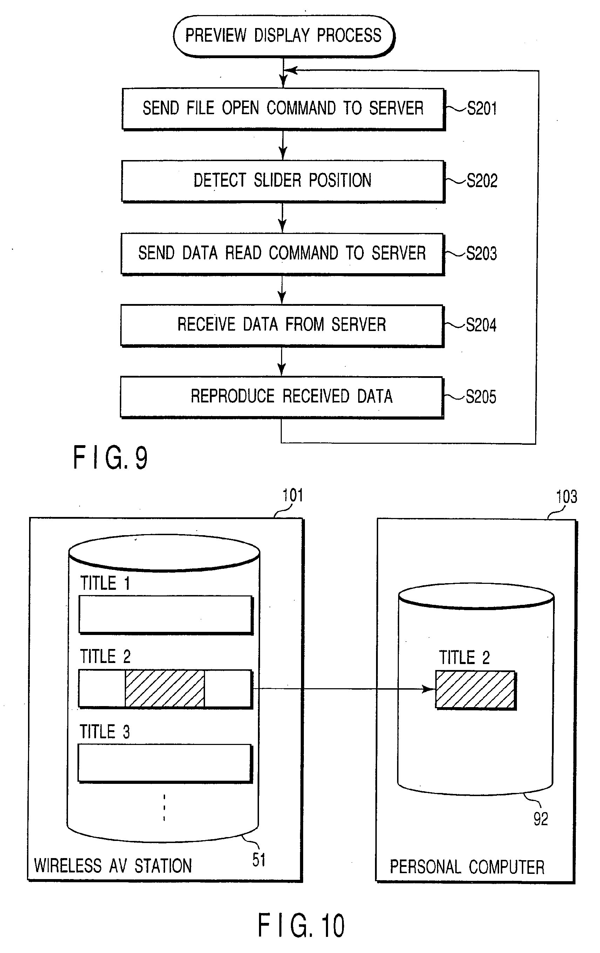

When the AV reproduction control program is activated by the user, the CPU 81 executes the AV reproduction control program. The AV reproduction control program causes the display monitor of the personal computer 103 to display the title list screen showing a list of titles of AV files such as broadcast program data recorded in the HDD 51 of the wireless AV station 101 (step S101). In step S101, the AV reproduction control program transmits a command requesting the list of AV files to the wireless AV station 101 via the wired LAN 15 or wireless LAN 14. The wireless AV station 101 manages the database showing the list of AV files recorded in the HDD 51. Based on the contents of the database, the wireless AV station 101 transmits the list of the titles of the AV files to the personal computer 103. FIG. 8 shows an example of the title list screen. The title list screen displays a list of the titles of the AV files recorded in the HDD 51 of the wireless AV station 101. In accordance with the user's operation of the mouse or keyboard, the AV reproduction control program selects one of the AV files from the title list (step S102).

The title list screen shown in FIG. 8 includes reproduction control buttons 701 and a "SAVE" button 702. The reproduction control buttons 701 comprise operation buttons (a rewind play button, a stop button, a play button and a fast-forward play button) for carrying out a reproduction control for an AV data file selected from the title list. The "SAVE" button 702 is an operation button for downloading the AV data file selected from the title list.

If the user operates the "SAVE" button 702 in the state in which a certain AV data file is selected, the AV reproduction control program acquires the management information associated with the selected AV data file from the wireless AV station 101. In addition, the AV reproduction control program causes the display monitor of personal computer 103 to display the "partial data copy" screen described with reference to FIG. 5 (step S103). The total reproduction time length of the AV data file is determined based on the management information.

In accordance with the user's operation on the "partial data copy" screen, the AV reproduction control program executes a position designation process for specifying the start position and end position of the stream of the to-be-downloaded partial data, which is included in the stream of the selected AV file (steps S104 and S105). In parallel with the position designation process, the AV reproduction control program also executes a preview display process for displaying the preview image.

The AV reproduction control program calculates a first address value and a second address value corresponding to the start position and end position designated in steps S104 and S105. Based on the calculated first address value and second address value, the AV reproduction control program starts a data transfer process for transferring only the stream of the partial data belonging to the time range between the start position and end position (i.e. data belonging to the range between the first address value and second address value) from the wireless AV station 101 to the personal computer 103.

In this data transfer process, the AV reproduction control program generates a data read command for reading out data corresponding to a predetermined data size as measured from the beginning position of the partial data belonging to the range between the start position and end position, on the basis of the first address value obtained by converting the time information designated by the start position. The AV reproduction control program sends the generated data read command to the wireless AV station 101 via the wired LAN 15 or wireless LAN 14 (step S106). Then, the AV reproduction control program executes a process for receiving data from the wireless AV station 101 and writing it into a file (steps S107 and S108). The AV reproduction control program repeats the processing in steps S106 to S108 until all data up to the second address value corresponding to the end position designated in step S105 is completely read out. Thereby, only the partial data belonging to the range between the start position and end position can be read out of the wireless AV station 101 and stored in the personal computer 103 as a file.

The flow chart of FIG. 9 illustrates the procedure of the preview display process executed in parallel with the position designation process in steps S104 and S105.

The AV reproduction control program sends to the wireless AV station 101 via the wired LAN 15 or wireless LAN 14 a file open command for requesting opening of the file selected in step S102 in FIG. 7 (step S201). Next, the AV reproduction control program detects the current position of the slider 606 on the time scale bar 606 displayed on the "partial data copy" screen shown in FIG. 5. The AV reproduction control program transmits a data read command for reading out, from the opened file, the partial data corresponding to the detected current position to the wireless AV station 101 via the wired LAN 15 or wireless LAN 14 (steps S202 and S203). The data read command, too, is generated based on the address value corresponding to the time information represented by the current position of the slider 606, which is obtained using the above-described conversion process. The AV reproduction control program receives the partial data sent from the wireless AV station 101 and reproduces it (steps S204 and S205). The partial data is the data corresponding to 1 GOP, as measured from the reproduction time corresponding to the current position of the slider 606. In the reproduction process in step S205, the AV reproduction control program decodes the compression-encoded partial data and displays it on the video preview area 602.

FIG. 10 illustrates an example in which part of an AV file (title 2) is copied from the HDD 51 of the wireless AV station 101 into a HDD 92 of the personal computer 103. Making use of the "partial data copy" function, only that part of the data stream of the AV file, which is desired by the user, can be copied from the HDD 51 of the wireless AV station 101 into the HDD 92 of the personal computer 103. Therefore, the partial data corresponding to the program part desired by the user can quickly be downloaded from among large-volume data files such as TV broadcast programs.

As has been described above, according to the above-described embodiment, the partial data belonging to the designated range in the data stream stored in the data storage device can be acquired from the data storage device via the network. Therefore, only the part desired by the user can quickly be downloaded from among large-volume data such as TV broadcast programs.

It should be noted that the "partial data copy" function is applicable not only to downloading of data from a server such as the wireless AV station 101, but also to downloading of data from various data storage devices on the network, which store data such as AV data as files.

## Claims

1. An information processing apparatus for performing communication with a data storage device (51) via a network (14, 15), **characterized by** comprising:
means for designating a section of a stream of data stored in the data storage device (51), the section being to be downloaded into the information processing apparatus; and
means for acquiring partial data, which includes a stream belonging to the designated section, from the data storage device (51) via the network (14, 15).

2. The information processing apparatus according to claim 1, **characterized in that** the designating means includes means for designating a start point and an end point of a stream to be downloaded into the information processing apparatus, which is included in the stream of the data stored in the data storage device (51).

3. The information processing apparatus according to claim 1, **characterized in that** the data stored in the data storage device (51) includes motion video data, and
the information processing apparatus further comprises means for displaying, as a preview image, an image at a given position on a stream of the motion video data on a display screen of the information processing apparatus.

4. The information processing apparatus according to claim 3, **characterized in that** the means for displaying the preview image includes means for acquiring, when a position on the stream of the motion video data to be displayed as the preview image is designated, data within the motion video data corresponding to the designated position from the data storage device (51) via the network (14, 15).

5. The information processing apparatus according to claim 1, **characterized by** further comprising means for storing the acquired partial data as a file.

6. The information processing apparatus according to claim 1, **characterized in that** the stream of the data stored in the data storage device (51) is stored in the data storage device (51) as a file, and
the means for acquiring the partial data includes:
means for opening the file stored in the data storage device (51), and
means for reading out, from the opened file via the network (14, 15), the partial data including the stream belonging to the section designated by the designating means.

7. The information processing apparatus according to claim 1, **characterized in that** the data stored in the data storage device (51) includes broadcast program data.

8. The information processing apparatus according to claim 1, **characterized in that** the data stored in the data storage device (51) includes motion video data,
the designating means includes means for designating a first time and a second time corresponding to the start point and the end point of a time range, to which the stream to be downloaded into the information processing apparatus belongs, the time range being within a total time length of the motion video data, and
the means for acquiring the partial data includes:
means for converting the designated first time to a first address indicative of an offset value from a beginning position of the motion video data,
means for converting the designated second time to a second address indicative of an offset value from the beginning position of the motion video data, and
means for acquiring, based on the first address and the second address, the partial data belonging to the time range within the stream of the motion video data from the data storage device (51) via the network (14, 15).

9. A data transfer method of transferring data stored in a server (101) to an information processing apparatus (103) via a network (14, 15), **characterized by** comprising:
designating (S104, S105) a section of a stream of data stored in the server (101), the section being to be downloaded into the information processing apparatus (103); and
transferring partial data, which includes a stream belonging to the designated section within the stream of the data, from the server (101) to the information processing apparatus (103).

10. The data transfer method according to claim 9, **characterized in that** the designating (S104, S105) includes designating a start point and an end point of a stream to be downloaded into the information processing apparatus (103), which is included in the stream of the data.

11. The data transfer method according to claim 9, **characterized in that** the data stored in the server (101) includes motion video data, and
the method further comprises displaying (S201, S202, S203, S204, S205), as a preview image, an image at a given position on a stream of the motion video data on a display screen of the information processing apparatus (103).

12. The data transfer method according to claim 11, **characterized in that** the displaying of the preview image includes acquiring, when a position on the stream of the motion video data to be displayed as the preview image is designated, data within the motion video data corresponding to the designated position from the server (101) via the network (14, 15).

13. The data transfer method according to claim 9, **characterized by** further comprising storing as a file the partial data that is transferred from the server (101) to the information processing apparatus (103).

14. The data transfer method according to claim 9, **characterized in that** the stream of the data stored in the server (101) is stored in the server (101) as a file, and
said transferring includes:
opening the file stored in the server (101), and
reading out, from the opened file via the network (14, 15), the partial data including the stream belonging to the section designated by said designating.

15. The data transfer method according to claim 9, **characterized in that** the data stored in the server (101) includes broadcast program data.

16. The data transfer method according to claim 9, **characterized in that** the data stored in the server (101) includes motion video data,
said designating includes designating a first time and a second time corresponding to the start point and the end point of a time range, to which the stream to be downloaded into the information processing apparatus (103) belongs, the time range being within a total time length of the motion video data, and
said transferring includes:
converting the designated first time to a first address indicative of an offset value from a beginning position of the motion video data,
converting the designated second time to a second address indicative of an offset value from the beginning position of the motion video data, and
transferring, based on the first address and the second address, the partial data including a stream belonging to the time range within the stream of the motion video data from the server (101) to the information processing apparatus (103) via the network (14, 15).
